# EUROPÄISCHE PATENTSCHRIFT

(11) **EP 0 420 852 B1**
(45) Veröffentlichungstag und Bekanntmachung des Hinweises auf die Patenterteilung: **26.05.1993**
(21) Anmeldenummer: 89904049.7
(22) Anmeldetag: 17.03.1989
(51) Int. Cl.: G01D 5/26, G01B 9/02

(54) **INTERFEROMETRISCHE EINRICHTUNG**
INTERFEROMETER
INTERFEROMETRE

(43) Veröffentlichungstag der Anmeldung: 10.04.1991
(73) Patentinhaber: Tabarelli, Werner, Dr., 9494 Schaan (LI)
(72) Erfinder: Tabarelli, Werner, Dr., 9494 Schaan (LI)
(74) Vertreter: Hofinger, Engelbert, DDr.
(86) Internationale Anmeldenummer: EP8900289
(87) Internationale Veröffentlichungsnummer: WO9011492

(56) Entgegenhaltungen:
- EP-A- 0 092 651
- EP-A- 0 290 789
- DE-A- 1 698 010
- DE-A- 1 698 011
- DE-A- 3 503 007
- GB-A- 1 076 318
- US-A- 3 656 853

## Beschreibung

Die Erfindung betrifft eine interferometrische Einrichtung zur Messung von Lageänderungen eines beweglichen Bauteiles, mit einer Lichtquelle zum Aussenden eines Lichtstrahlenbündels, mit einer Strahlteilereinrichtung zur Aufteilung dieses Lichtstrahlenbündels in zwei getrennte Teilstrahlenbündel, von denen zumindest ein Teil des einen Teilstrahlenbündels einen festen Referenzzweig durchläuft und zumindest ein Teil des anderen Teilstrahlenbündels einen Meßzweig veränderbarer optischer Länge durchläuft, wobei er über ein verstellbares, mit dem beweglichen Bauteil verbundenes Reflektorsystem geführt ist, und mit einer fotoelektrischen Detektorvorrichtung, die die Intensität der nach Durchlaufen des Referenzzweiges bzw. des Meßzweiges zur Interferenz gebrachten Teilstrahlenbündel analysiert, wobei die optischen Komponenten samt Meß- und Referenzzweig in einem im wesentlichen geschlossenen Gehäuse angeordnet sind und wenigstens eine zumindest zeitweilig einschaltbare Einrichtung zur Erzeugung einer den Meßzweig des Interferometers erfassenden Gasströmung vorgesehen ist.

Bei einer interferometrischen Messung liegt die Länge eines festzustellenden Verschiebeweges in Einheiten der im gasförmigen Medium vorliegenden Wellenlänge des verwendeten Lichtstrahles vor, wobei diese Wellenlänge im Medium von der momentanen Brechzahl im Medium (und natürlich von der Frequenz des Lichtstrahles) abhängt. Die genaue Kenntnis der momentanen Brechzahl des Mediums, insbesondere im Meßzweig, sowie der Frequenz des Lichtstrahles bzw. der im Medium vorliegenden Wellenlänge ist also eine Voraussetzung für die gewünschte genaue Kenntnis eines beweglichen Bauteiles in metrischen Einheiten.

Bei Interferometeranordnungen mit geringen relativen Meßunsicherheiten ist deshalb in der Praxis eint eigene Ermittlung der im Medium vorliegenden Lichtwellenlänge durch eine Wellenlängenbestimmungseinrichtung nötig. Bei bekannter Frequenz eignen sich dazu im Prinzip Brechzahlbestimmungsverfahren,wie z.B. das Parameterverfahren (Messung von Druck, Temperatur und sonstige Parameter und formelmäßige Berechnung der Brechzahl n) oder das Refraktometerverfahren (Ermittlung der Brechzahl n durch Vergleich der optischen Weglängen bei gleichen geometrischen Weglängen in Luft einerseits und im Vakuum andererseits). ist die Frequenz des verwendeten lichtes nicht genau bekannt, wie es etwa bei Laserdioden der Fall sein kann, so bietet sich die Möglichkeit eines interferometrischen Vergleiches mit einer mechanischen Maßverkörperung bestimmter länge an, wobei die Hellenlänge eines Lichtstrahles im Medium direkt (ohne gesonderte Bestimmung der Brechzahl n und Frequenz f) ermittelt werden kann.

Aus der EP-A-135 000 ist bereits eine interferometereinrichtung bekannt, bei der alle optischen Komponenten incl. Meßzweig und Referenzzweig in einem geschlossenen Gehäuse angeordnet sind. Weiters ist vorgesehen, im Gehäuse eine Wellenlängenbestimmungseinrichtung bzw. deren Sensoren (Meßbereich) anzuordnen. Durch ein Gehäuse wird zunächst ein gewisser Schutzeffekt gegenüber Verunreinigungen (Staub, öldämpfe etc.) erreicht, die eine Brechzahländerung und damit eine Wellenlängenänderung hervorrufen können. Weiters lassen sich durch ein Gehäuse rasche zeitliche Änderungen der Mediumsbedingungen, insbesondere der Temperatur, vermeiden, womit Schlieren im Meßzweig, wie sie bei "offenem" Meßzweig auftreten können, unterdrückbar sind und womit die Bestimmung der momentanen Wellenlänge des im Meßzweig laufenden Teilstrahlenbündels in Echtzeit erleichtert ist. Bei der bekannten Einrichtung wird jedoch von der Möglichkeit, rasche zeitliche Brechzahländerungen zu vermeiden, nicht Gebrauch gemacht. Vielmehr werden Druckschwankungen, mit denen natürlich Brechzahlschwankungen verbunden sind, im Gehäuse absichtlich erzeugt, um den Meßstift auszufahren. Auch beim Einfahren des Meßstiftes entstehen zunächst lokale Druckunterschiede,die die gesamte Meßgenauigkeit trotz der durchgeführten Brechzahlmessung herabsetzen. Bei der genannten und anderen bekannten Interferometeranordnungen mit einer Wellenlängen - bzw. Brechzahlbestimmungseinrichtung besteht nämlich, abgesehen von gewissen Nachteilen einzelner Bestimmungsverfahren an sich, das Problem, die tatsächlich momentan im gesamten Meßzweig vorliegende Lichtwellenlänge zu bestimmen.

Eine für sich noch so exakt arbeitende Wellenlängenbestimmungseinrichtung bietet hier im Hinblick auf die insgesamt erzielbare Meßgenauigkeit der interferometrischen Einrichtung keinerlei Vorteile, wenn die der Wellenlängebestimmung im Meßbereich der Hellenlängenbestimmungseinrichtung zugrundeliegenden Mediumsbedingungen (Temperatur, Druck etc.) nicht mit den momentan im Meßzweig herrschenden Mediumsbedingungen im Rahmen der geforderten Meßgenauigketi übereinstimmen. Bei lokalen Druckunterschieden während der Messung sind solche gleichen Mediumsbedingungen sicherlich nicht vorhanden. Zu erwähnen ist noch, daß die Problematik der im Rahmen der Meßgenauigkeit gleichen Mediumsbedingungen im gesamten Meßzweig und bei der Wellenlängenbestimmungseinrichtung zwar dadurch verringerbar ist, daß man die Wellenlängenbestimmungseinrichtung bzw. deren meßsignalerzeugenden Komponenten näher am Meßzweig anordnet. Nun liegen aber in der Praxis beim beweglichen Bauteil, in dessen Nähe der Meßzweig liegt, häufig enge Platzverhältnisse vor, die eine derartig nahe Anordnung nicht erlauben, insbesondere wenn die Wellenlängenbestimmung über den Vergleich mit einer doch recht sperrigen Maßverkörperung erfolgt. Außerdem ist eine interferometrische Einrichtung bei im wesentlichen gleicher Grundgehäuseform flexibler hinsichtlich der Anpassung an die Lageverhältnisse beim beweglichen Bauteil, wenn die Wellenlängenbestimmungseinrichtung bzw. deren Meßbereich örtlich vom Meßzweig getrennt in der Gehäuseform liegt, während der je nach gestellter Meßaufgabe aufgebaute Meßzweig des Interferometers beispielsweise in einem lösbar mit der Grundgehäuseform verbundenen Gehäusefortsatz untergebracht ist.

Die DE-A-16 98 010 zeigt eine optische Meßanordnung, bei der die Meßstrecke von einem Gehäuse umgeben ist, welchem klimatisierte Luft zugeführt wird, um die Brechzahl im Inneren des Gehäuses möglichst konstant zu halten. Eine Messung der Brechzahl bzw. Wellenlänge im Gehäuse erfolgt nicht.

Aufgabe der Erfindung ist es, eine kompakte und robuste interferometrische Einrichtung der eingangs genannten Gattung zu schaffen, mit der auch bei variierenden äußeren Bedingungen, wie beispielsweise bei Temperatur-und Druckschwankungen, Schwankungen der Gaszusammensetzung oder der Feuchte, eine äußerst genaue Messung von Lageänderungen eines beweglichen Bauteiles möglich ist. Dies soll auch dann möglich sein, wenn die Wellenlängenbestimmungseinrichtung bzw. deren Meßbereich beispielsweise aus Platzgründen nicht direkt am Meßzweig liegt.

Dies wird erfindungsgemäß dadurch erreicht, daß bei einer Einrichtung der eingangs genannten Art innerhalb des Gehäuses der Meßbereich einer Wellenlängenbestimmungeinrichtung zur Bestimmung der Wellenlänge des in einem gasförmigen Medium laufenden Meßzweig-Teilstrahlenbündels angeordnet ist und daß die Gasströmung derart geführt ist, daß sie gezielt sowohl den Meßzweig des Interferometers als auch den Meßbereich der Wellenlängenbestimmungseinrichtung erfaßt.

Mit einer derartigen Einrichtung ist es möglich, im gesamten Meßzweig des Interferometers und im Meßbereich der Wellenlängenbestimmungseinrichtung, d. h. an örtlich verschiedenen Stellen, im wesentlichen gleiche (optisch äquivalente) Mediumsbedingungen (Temperatur, Druck, Feuchte etc.) herzustellen bzw. aufrechtzuerhalten. Damit ist auch bei variierenden äußeren Bedingungen eine exakte Messung der Lageänderung eines Bauteiles möglich. Wesentlich ist also weniger die oft schwierige bzw. unmögliche Konstanthaltung der Mediumsbedingungen im Gehäuse, wenngleich das Gehäuse auch dazu beiträgt, als vielmehr die Gleichhaltung der Mediumsbedingungen beim Meßzweig des Interferometers und dem Meßbereich der Wellenlängenbestimmungseinrichtung. Der Meßbereich ist jener Bereich, in dem die Meßwerte erfaßt werden (beim Parameterverfahren beispielsweise der Ort der Druck-, Temperatur-und Feuchtesensoren, beim Vergleich mit einer mechanischen Maßverkörperung im wesentlichen der Bereich dieser Maßverkörperung). Auf die Anordnung von elektrischen Auswert- und Anzeigevorrichtungen der Wellenlängenbestimmungseinrichtung kommt es natürlich nicht an. Diese können auch außerhalb des Gehäuses liegen.

Unter "im wesentlichen gleichen" Mediumsbedingungen werden im Rahmen der vorliegenden Erfindung solche Bedingungen verstanden, bei denen die zugehörige relative Bechzahldifferenz jedenfalls kleiner oder gleich der geforderten Meßgenauigkeit für die Lageänderung des beweglichen Bauteiles liegt. Soll z.B. die Meßunsicherheit bei einer Verschiebestrecke von 1 m kleiner als 0,1 µm sein, so muß die genannte relative Brechzahldifferenz Δn/n < 10⁻⁷ sein, damit die Mediumsbedingungen als "im wesentlichen gleich" angesehen werden. Die erfindungsgemäß hervorgerufene Gasströmung kann parallel zur Wellenlängenbestimmungseinrichtung und zum Meßzweig führen. Alternativ ist eine Gasströmung möglich, bei der die Wellenlängenbestimmungseinrichtung und der Meßzweig in Serie durchströmt werden. Dies kann beispielsweise durch eine elektrische Ventilatoreinrichtung erreicht werden, die eine Umwälzeinrichtung im Gehäuse und/oder eine Lüftereinrichtung in der Gehäusewand sein kann. Mit der Lüftereinrichtung erscheint auch die Herstellung eines Vakuums (zumindest eines Grobvakuums) im Gehäuse möglich, wenngleich auch eine konditionierte Atmosphäre bei ungefährem Außendruck im Hinblick auf bestehende Dichtprobleme günstiger erscheint.

Die erfindungsgemäß vorgesehene Einrichtung zur Erzeugung einer Gasströmung kann dauernd eingeschaltet sein, wobei natürlich ein geringer Gasdurchsatz zur Sicherstellung von überall gleichen Mediumsbedingungen ausreicht und im Hinblick auf geringe Druckunterschiede vorteilhaft ist. Prinzipiell ist es auch denkbar, die erfindungsgemäße Einrichtung zeitweise, beispielsweise während der eigentlichen Messung, abzuschalten, und immer nur zwischen diesen Messungen zu aktivieren.

Um die Lageänderungen des beweglichen Bauteiles auf das im Gehäuse befindliche bewegliche Reflektorsystem zu übertragen, kann vorzugsweise eine durch eine Bürstendichtung in einer Gehäusewand verlaufende Verbindungseinrichtung vorgesehen sein. Die Bürstendichtung darf dabei im Rahmen der geforderten Meßgenauigkeit natürlich keine Unsicherheit in der Übertragung der Bauteilbewegungen auf die Reflektorsystembewegungen hervorrufen. Grundsätzlich ist es auch möglich, den beweglichen Bauteil zumindest teilweise im Gehäuse anzuordnen und die geforderte praktische Geschlossenheit des Gehäuses z.B. durch einen Faltenbalg oder eine äquivalente Einrichtung sicherzustellen.

Als Wellenlängenbestimmungseinrichtungen eignen sich insbesondere solche, die durch einen interferometrischen Vergleich eines Lichtstrahlenbündels mit einer mechanischen Maßverkörperung (Etalon) dessen Wellenlänge in einem Medium direkt (ohne getrennte Ermittelung von Frequenz des lichtes und Brechzahl des Mediums) ermitteln. Wesentlich ist es dabei, daß die verwendeten Etalons "offen" sind, d.h. daß zwischen als Endmaßen dienenden Reflexionsflächen durch die vorgesehene Gasströmung im wesentlichen dieselben Mediumsbedingungen herrschen können, wie auf der eigentlichen Meßstrecke.

Vorteilhaft ist eine Ausführungsform der Wellenlängenbestimmungseinrichtung, bei der die Hellenlängenbestimmungseinrichtung ein Etalon mit zwei beabstandeten Reflexionsflächen, sowie einen Hilfsreflektor aufweist, der um eint durch den Abstand der Reflexionsflächen gegebebene Strecke verschiebbar ist und dessen Verschiebeweg gleichzeitig durch ein Hilfsinterferometer erfaßbar ist, wobei durch die Gasströmung auf der Verschiebestrecke des Hilfsreflektors, zwischen den beiden Reflexionsflächen des Etalons und im eigentlichen Meßzweig, im wesentlichen dieselben Mediumsbedingungen hergestellt bzw. aufrechterhalten sind. Eine absolute Bestimmung der Wellenlänge im Medium kann mit dieser Ausführungsform exakt durchgeführt werden, auch wenn die Frequenz der lichtquelle unbekannt ist.

In der Praxis ist es nicht notwendig, die Wellenlänge im Medium laufend absolut zu bestimmen. Vielmehr reicht eine Verfolgung von Wellenlängenänderungen über bestimmte Zeiträume aus, um die Wellenlänge zu jedem Zeitpunkt genau zu kennen. Eine bevorzugte Ausführungsform sieht vor, daß die Wellenlängenbestimmungseinrichtung in an sich bekannter Weise eine Hilfsinterferometereinrichtung zur Erfassung und/oder Kompensation von Wellenlängenänderungen umfaßt, welche die durch Änderung der Brechzahl des Mediums und/oder der Frequenz des von der lichtquelle ausgesandten lichtes hervorgerufene scheinbare Abstandsänderung zweier Reflexionsflächen, erfaßt, wobei diese Reflexionsflächen von den Reflexionsflächen eines außerdem zur absoluten Hellenlängenbestimmung verwendeten Etalons gebildet bzw. darauf angebracht sind. Der besondere Vorteil dieser Ausführungsform liegt darin, daß ein zur absoluten Wellenlängenbestimmung vorhandenes Etalon gleichzeitig auch zur Erfassung von Wellenänderungen benützt wird, womit die Zahl der Stellen, an denen im wesentlichen gleiche Mediumsbedingungen wie im Meßzweig vorliegen müssen, gering gehalten werden kann.

Die Erfindung wird in der folgenden Figurenbeschreibung anhand eines Ausführungsbeispieles näher erläutert.

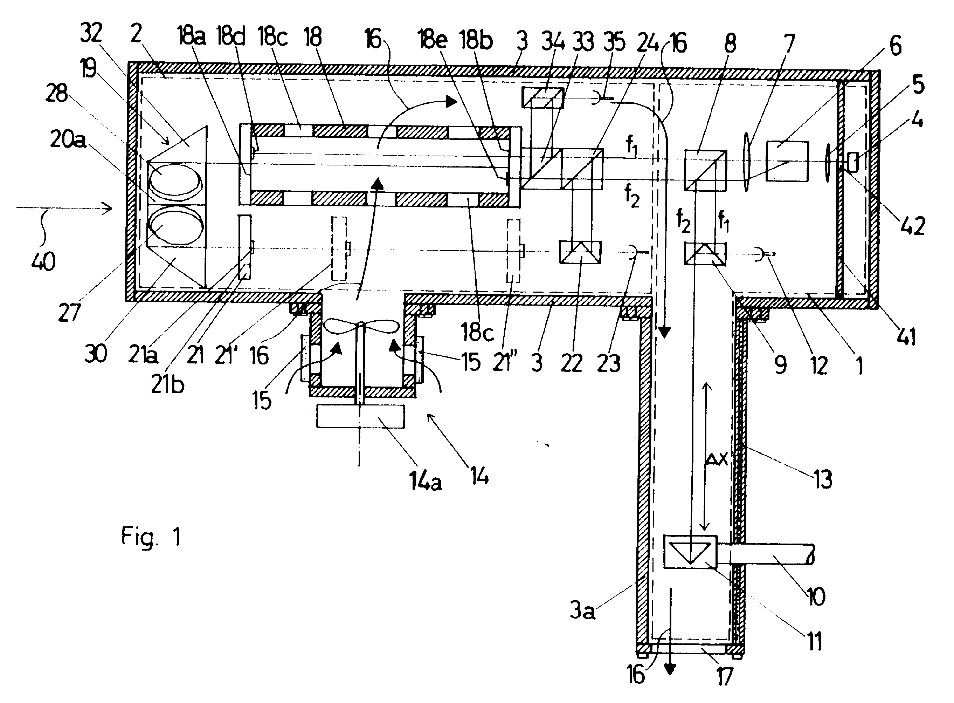

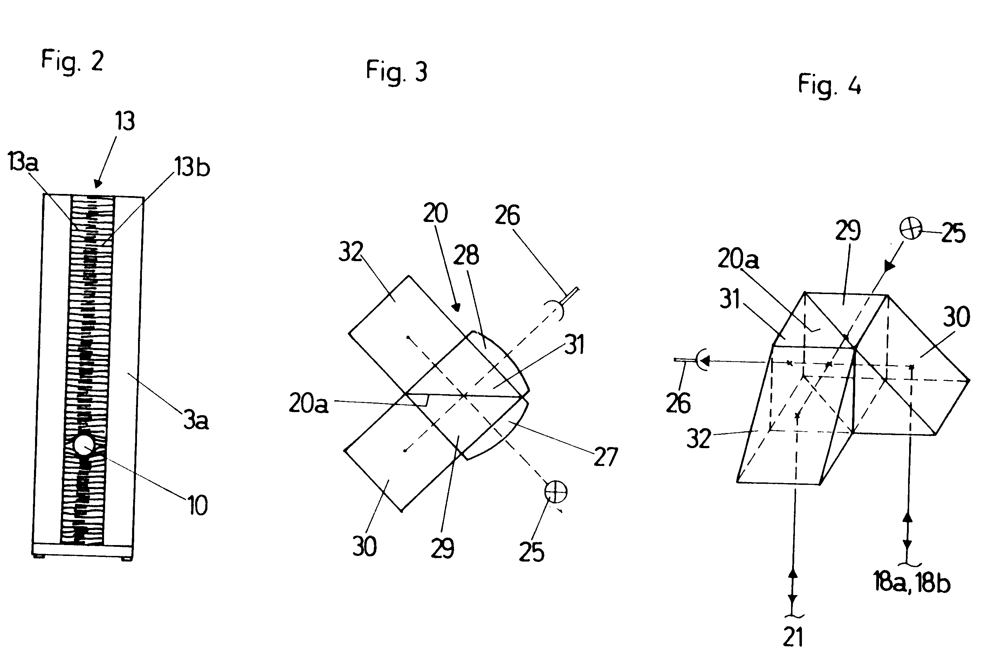

Es zeigen die Fig. 1 eine in Draufsicht schematisch dargestellte,erfindungsgemäße,interferometrische Einrichtung zur Messung von Verschiebestrecken eines beweglichen Bauteiles, die Fig. 2 die Bürstendichtung aus Fig. 1 in einer Seitenansicht, Fig. 3 das Michelson-interferometer der Wellenlängenbestimmungseinrichtung der Fig. 1 in einer Seitenansicht gemäß dem Pfeil 40 in Fig. 1,und Fig. 4 dessen Strahlteiler in einer perspektivischen Ansicht.

Die in Fig. 1 gezeigte interferometrische Einrichtung arbeitet nach dem sogenannten Heterodyn-Verfahren, bei dem zwei frequenzmäßig geringfügig differierende Teilstrahlenbündel verwendet werden.

Die in Fig. 1 gezeigte Einrichtung weist eine insgesamt mit 1 bezeichnete Meßinterferometeranordnung zur Messung von Verschiebestrecken eines beweglichen Bauteiles, eine Wellenlängenbestimmungseinrichtung 2 und ein im wesentlichen geschlossenes, umgebendes Gehäuse 3 auf.

Eine als Lichtquelle dienende Laserdiode 4 sendet ein monochromatisches, infrarotes Lichtstrahlenbündel aus, das von der Linse 5 gesammelt und auf den akusto-optischen Kristall 6 fokussiert wird. In diesem als Strahlteilereinrichtung funktionierenden akusto-optischen Kristall 6 erfolgt die Aufteilung in zwei getrennte Teilstrahlenbündel mit den Frequenzen f₁ und f₂, wobei das geradeauslaufende Teilstrahlenbündel die Originalfrequenz f₁ hat, während das abgelenkte Teilstrahlenbündel eine um Δf (ca. 50 MHz) verschobene Frequenz aufweist (f₂=f₁+ Δ f). Die nachgeschaltete Linse 7 richtet die beiden Teilstrahlenbündel parallel aus.

Ein Strahlteilerwürfel 8, der eine halbdurchlässige Spiegelschicht aufweist, die durch die halbverspiegelte Diagonalfläche eines Würfels aus Glas gebildet ist, lenkt einen Teil beider Teilstrahlenbündel in Richtung der Mischeinrichtung 9, in der das eine feste Referenzstrecke durchlaufende Teilstrahlenbündel und das über das am beweglichen Bauteil (nicht dargestellt) über eine Verbindungsstange 10 verbundene Reflektorsystem 11 laufende andere Teilstrahlenbündel überlagert werden und einem Fotodetektor 12 zugeführt werden, der an eine elektronische Auswerteinrichtung angeschlossen ist. Die genannte Mischeinrichtung 9 besteht lediglich aus zwei halbdurchlässigen Spiegelflächen, die zum Schutz innerhalb von Glaskörpern angeordnet sind. Bei ruhendem Reflektorsystem 11 ändert sich die Amplitude der auf den Fotodetektor 12 auftreffenden Gesamtstrahlung mit der Ruhe-Schwebungsfrequenz Δf der beiden Teilstrahlen, welche in der Auswerteinrichtung, die nicht Gegenstand der Erfindung ist, gezählt wird. im Gegensatz zu den Frequenzen f₁, f₂ der Teilstrahlen, die im 5.10¹⁴Hz-Bereich liegen und heute nicht direkt meßbar sind, ist Δf, das ca. 50 MHz beträgt, direkt und präzise meßbar. Bei Bewegung des Bauteiles bzw. des Reflektorsystems 11 ändert sich auf Grund des Doppler-Effektes die Frequenz des über das Reflektorsystem 11 laufenden Teilstrahlenbündels proportional mit der Verschiebegeschwindigkeit. Die damit entstehende Änderung der vom Fotodetektor 12 empfangenen Schwebungsfrequenz gegenüber der Ruhe-Schwebefrequenz ist ein Maß für die momentane Verschiebegeschwindigkeit, die über die Zeit integriert die Verschiebestrecke Δ x des Reflektorsystems 11 in Einheiten der vorhandenen Wellenlänge im Medium auf der Meßstrecke (im folgenden kurz Luftwellenlänge genannt,obwohl durchaus auch andere Medien als Luft denkbar sind) ergibt. Um diese Verschiebestrecke in metrischen Einheiten zu kennen, muß diese Luftwellenlänge zu allen Zeiten genau bekannt sein. Zur Ermittlung dieser Luftwellenlänge dient die mit 2 bezeichnete Hellenlängenbestimmungseinrichtung, welche im folgenden noch näher beschrieben werden wird.

Das verstellbare Reflektorsystem 11 ist samt dem im vorliegenden Fall die Meßstrecke Δx enthaltenden Meßzweig , sowie den optischen Komponenten der Hellenlängenbestimmungseinrichtung 2 im Gehäuse 3 angeordnet, wobei die von der Lüftereinrichtung 14 hervorgerufene Luftströmung im Meßzweig des Interferometers und beim davon örtlich getrennten Meßbereich der Wellenlängenbestimmungseinrichtung 2 im wesentlichen gleiche Mediumsbedingungen, insbesondere Temperatur, Druck und Feuchte sicherstellt. im Hinblick auf eine gute übereinstimmung der Mediumsbedingungen im Meßzweig und bei der Wellenlängenbestimmungseinrichtung 2 wäre es am günstigsten, diese möglichst nahe am Meßzweig anzuordnen. Nun liegen aber in der Praxis beim beweglichen Bauteil, in dessen Nähe der Meßzweig liegt, häufig enge Platzverhältnisse vor, die eine derartig nahe Anordnung nicht erlauben, insbesondere wenn die Wellenlängenbestimmung über den Vergleich mit einer doch recht sperrigen Maßverkörperung erfolgt. Außerdem ist eine interferometrische Einrichtung bei im wesentlichen gleicher Grundgehäuseform flexibler hinsichtlich der Anpassung an die Lageverhältnisse beim beweglichen Bauteil, wenn die Wellenlängenbestimmungseinrichtung bzw. deren Meßbereich örtlich vom Meßzweig getrennt in der Gehäuseform liegt, während der je nach gestellter Meßaufgabe aufgebaute Meßzweig des Interferometers beispielsweise in einem lösbar mit der Grundgehäuseform verbundenen Gehäusefortsatz 3a untergebracht ist.

Dieser Gehäusefortsatz 3a weist beim gezeigten Ausführungsbeispiel, mit dem lineare Verschiebungen eines beweglichen Bauteiles gemessen werden sollen, einen durch eine Bürstendichtung gegenüber der Verbindungsstange 10 abgedichteten Gehäuseschlitz auf, wobei ein Teil 13a der Borstenhaare von einer Längsseite des Gehäuseschlitzes in diesen ragt, während der andere Teil 13b der Borstenhaare von der gegenüberliegenden Längsseite des Gehäuseschlitzes in diesen ragt (Fig. 2).

Zur Sicherstellung gleicher Mediumsbedingungen im Meßzweig und bei der Wellenlängenbestimmungseinrichtung 2 ist die an der Gehäusewand angebrachte, symbolisch dargestellte Lüftereinrichtung 14 vorgesehen, die dem Gehäuse 3 von außen über Filter 15 Luft zuführt und die im Gehäuseinneren eine wohldefinierte, im wesentlichen laminare Strömung (wie sie durch die Pfeile 16 angedeutet ist) durch die optischen Komponenten der Wellenlängenbestimmungseinrichtung 2 hindurch, dem Meßzweig entlang und schließlich durch die Austrittsöffnung 17 ins Freie hervorruft.

Um Temperaturgradienten im Gehäuseinneren von vornherein gering zu halten, sind der Antriebsmotor 14a der Lüftereinrichtung 14, sowie die sonstigen Wärmequellen soweit als möglich außerhalb des Gehäuses 3 angeordnet. Die Lichtquellen, insbesondere die Laserdiode 4, sind gegenüber jenem Gehäusebereich, der die Wellenlängenbestimmungseinrichtung 2 und den Meßzweig enthält, wärmegedämmt. Zur Wärmedämmung der Laserdiode 4 ist eine Schottwand 41 mit einer Druchtrittsöffnung 42 vorgesehen, in die ein Fenster aus durchsichtigem Material eingesetzt sein kann.

Die insgesamt mit 2 bezeichnete Einrichtung zur Bestimmung der Luftwellenlänge weist ein seitlich offenes Etalon 18 mit zwei beabstandeten Reflexionsflächen 18a und 18b, sowie ein Weißlicht-Michelson-Interferometer 19 auf, das einen optischen Strahlteiler 20 umfaßt, von dem zwei Teilstrahlenbündel ausgehen, wobei beide Reflexionsflächen 18a, 18b des Etalons 18 in den Strahlengang des einen und ein verschiebbarer Hilfsreflektor 21 (21' und 21'' bezeichnen verschiedene lagen dieses Hilfsreflektors) in den Strahlengang des anderen Teilstrahlenbündels eingebracht sind und diese Teilstrahlen jeweils auf den Strahlteiler 20 des Weißlicht-Michelson-Interferometers zurückreflektieren.

Der Verschiebeweg des Hilfsreflektors, welcher einen Infrarot-Spiegelfleck 21a trägt, wird über den Strahlteiler 22, der gleich aufgebaut ist wie die Mischeinrichtung 9, und einen Fotodetektor 23 einer Interferometeranordnung, der an eine elektronische Auswertschaltung angeschlossen ist, auf analoge Weise in Einheiten der Luftwellenlänge ermittelt, wie dies bei der eigentlichen Meßstrecke Δ x der Fall ist. Die beiden Lichtstrahlen f₁, f₂ gelangen dabei über das Umlenkprisma 24 zum Strahlteiler 22.

Im Gegensatz zur Meßstrecke Δx ist jedoch hier die Verschiebestrecke des Hilfsreflektors über das offene Etalon 18 und das Weißlicht-Michelson-Interferometer - wie es im folgenden noch ausführlich beschrieben werden wird - in metrischen Einheiten genau bekannt. Ein Vergleich mit der über den Strahlteiler 22 und den Fotodetektor 23 ermittelten, in Luftwellenlängen vorliegenden Verschiebestrecke mit der andererseits auch in metrischen Einheiten genau bekannten Verschiebestrecke liefert sofort die gewünschte Luftwellenlängen des vom optischen Strahlteiler 22 auf den Infrarot-Spiegelfleck 21a geworfenen Lichtstrahles, dessen anderer, vom Strahlteiler 8 ausgehender Teil auf der eigentlichen Meßstrecke Δx verwendet wird.

Die Verschiebestrecke ist in metrischen Einheiten durch den Abstand der beiden Reflexionsflächen 18a und 18b des Etalons 18 genau vorgegeben, wobei das Etalon 18 aus Materialien mit geringen Temperaturausdehnungskoeffizienten gebildet ist und im folgenden noch näher beschrieben werden wird.

Die exakte Ablesung dieser Referenzstrecke des Etalons 18, d.h. die Übertragung dieser Referenzstrecke auf den Verschiebeweg des Reflektorsystems 21, erfolgt im vorliegenden Ausführungsbeispiel über das Weißlicht-Michelson-Interferometer 19, das in den Fig. 3 und 4 noch näher dargestellt ist.

Das Weißlicht-Michelson-Interferometer 19 weist einen Strahlteiler 20, der mit symmetrisch zur eigentlichen Strahlteilerschicht 20a liegenden Umlenksystemen aus Einzelprismen versehen ist, sowie eine Weißlichtquelle 25 (beispielsweise eine möglichst punktförmige Mikro-projektions-Halogenlampe) und einen Fotodetektor 26 auf, die jeweils im Brennpunkt von Sammellinsen 27 bzw. 28 angeordnet sind (Fig. 3). Durch die Sammellinsen werden parallele Strahlenbündel relativ großen Durchmessers erzeugt bzw. solche Strahlenbündel auf den Fotodetektor 26 fokussiert. Der Vorteil eines derartigen symmetrischen Umlenksystems, das gleiche Glaswege für Teilstrahlenbündel beiderseits der Strahlteilerschicht 20a sicherstellt, liegt darin, daß die beiden Teilstrahlenbündel parallel verlaufen (im Gegensatz zum klassischen Michelson-Interferometer, wo die Teilstrahlenbündel der beiden Interferenzzweige senkrecht aufeinander verlaufen). Die Parallelität erlaubt zunächst eine wesentlich kompaktere Bauweise der gesamten Wellenlängenbestimmungseinrichtungen 2, als etwa bei senkrecht verlaufenden Teilstrahlenbündeln. Weiters liegt der Verschiebeweg des Hilfsreflektors 21 direkt neben dem mit Öffnungen 18c versehenen Etalon 18, wodurch von vornherein praktisch gleiche Luftbedingungen zwischen den Reflektorflächen 18a und 18b des Etalons 18 einerseits und auf dem Verschiebeweg des Hilfsreflektors 21 andererseits sichergestellt sind. Durch die Luftströmung stimmen diese Luftbedingungen außerdem mit denen im Meßzweig überein.

Aus Fig. 4 ist ersichtlich, wie die Umlenksysteme des Strahlteilers 20 aus je zwei Halbwürfeln 29, 30, 31 und 32 aufgebaut sind. Der übersichtlichkeit halber sind die Sammellinsen 27 und 28 in Fig. 4 nicht dargestellt.

Die vom Hilfsreflektor 21 und vom Etalon 18 zurückgeworfenen Teilstrahlenbündel gelangen jeweils wieder auf die Strahlteilerschicht 20a, wo sie rekombiniert werden und von wo sie auf den Fotodetektor 26 gelangen. Stimmt nun die optische Weglänge (von und bis zur Strahlteilerschicht 20a) des über den Hilfsreflektor 21 laufenden Teilstrahlenbündels mit der optischen Weglänge für das andere Teilstrahlenbündel zwischen Strahlteilerschicht und einer der beiden Reflektorflächen 18a bzw. 18b überein, so detektiert der Fotodetektor 26 je nach Aufbau des Strahlteilers 20 ein Minimum oder ein Maximum. Dieses Extremum tritt für alle im Weißlicht vorhandenen Wellenlängen gleichzeitig nur dann auf, wenn der optische Lichtweg über den Hilfsreflektor 21 einerseits mit dem optischen Lichtweg über eine der beiden Reflexionsflächen 18a bzw. 18b völlig übereinstimmt. Fährt also der verschiebbare Hilfsreflektor 21 einen geeigneten Verschiebeweg ab, so tritt im laufe dieses Abfahrens zweimal ein Extremum im Fotodetektor auf. Die zwischen diesen beiden Extrema abgefahrene Verschiebestrecke entspricht genau dem in metrischen Einheiten bekannten Abstand der Reflexionsflächen 18a und 18 b des Etalons 18. Das Etalon 18 weist eine erste senkrecht zum Strahlengang liegende und für Weißlicht teildurchlässige Spiegelschicht 18a und eine zweite dahinterliegende Vollspiegelschicht 18b mit einem Reflexionsgrad von über 95 % für alle im Weißlicht enthaltenen Wellenlängen auf. Am verschiebbaren Hilfsreflektor 21, der als Träger eine planparallele Glasplatte aufweist, ist neben dem Infrarot-Spiegelfleck 21a noch eine Spiegelschicht 21b aufgebracht, die das Weißlicht des Weißlicht-Michelson-Interferometers 19 reflektiert. Durch diesen Aufbau wird vorteilhafterweise eine völlige Trennung des im Weißlicht-Michelson-Interferometer 19 verwendeten Lichtes von dem (im vorliegenden Fall infraroten) Lichtstrahl, dessen Luftwellenlänge bestimmt werden soll, erreicht.

Dasselbe Etalon 18, das in der oben beschriebenen Weise zur absoluten Bestimmung der Luftwellenlänge dient, wird gleichzeitig zur Erfassung von Hellenlängenänderungen herangezogen. Es trägt dazu auf den Reflexionsflächen 18a bzw. 18b je einen Infrarot-Spiegelfleck 18d bzw. 18e, der jeweils einen aus der Lichtquelle 4 stammenden und vom Strahlteiler 6 aufgeteilten Teilstrahl bestimmter Frequenz über einen Strahlteiler 33 auf eine Mischeinrichtung 34 reflektiert. Ein Fotodetektor 35 und eine daran angeschlossene Auswerteinheit (nicht dargestellt) überwachen die Schwebungsfrequenz des aus der Mischeinrichtung 34 austretenden Signals. Diese Schwebungsfrequenz ist im Normalfall (konstante Frequenzaufspaltung im Strahlteiler 6 immer vorausgesetzt) konstant, da ja die Infrarot-Spiegelflecken 18d und 18e einen festen Abstand aufweisen. Andert sich nun die Frequenz der Lichtquelle 4 oder die Brechzahl der Luft im Meßzweig und damit die Brechzahl im Etalon 18, so detektiert der Fotodetektor eine scheinbare Abstandsänderung der Infrarot-Spiegelflecken 18d und 18e, woraus die Wellenlängenänderung ermittelbar ist.

Die Erfindung ist nicht auf das gezeigte Ausführungsbeispiel beschränkt. Das Gehäuse braucht nicht ausschließlich starre Wände aufzuweisen. Es ist durchaus möglich, daß das Gehäuse aus zumindest zwei Gehäuseteilen besteht, die über flexible Schläuche oder starre Rohre miteinander verbunden sind und eine insgesamt im wesentlichen geschlossene Einheit bilden. Grundsätzlich ist es auch denkbar, daß der Strahlengang stellenweise außerhalb des Gehäuses bzw. von Gehäuseteilen verläuft. Verwendet man für das Laserlicht der innenliegenden Interferometeranordnung undurchsichtige Gehäusewandungen, so erreicht man zusätzlich einen Schutzeffekt, insbesondere für die Augen, vor einem austretenden Direkststrahl oder Streustrahl.

Im gezeigten Ausführungsbeispiel verläuft die Strömung in Serie durch die Hellenlängenbestimmungseinrichtung und dann über den Meßzweig. Selbstverständlich sind auch Anordnungen möglich, bei denen die Wellenlängenbestimmungseinrichtung und der Meßzweig strömungsmäßig parallel liegen.

Zu erwähnen ist noch, daß auch offene Etalons fester länge zur Wellenlängenbestimmung herangezogen werden können, wobei die Interferenzmuster(ringe)) mittels Photodetektoren erfaßt und elektronisch ausgewertet werden. Vor allem bei kleinem Spiegelabstand eines Etalons (im Millimeterbereich) und bei konstruktionsbedingten kleinen öffnungen zum Raum zwischen den Spiegelflächen des Etalons ist die erfindungsgemäß hervorgerufene Gasströmung von großem Vorteil, um im Etalon nicht nur Druck und Temperatur, sondern auch andere Parameter, wie beispielsweise Feuchte oder Gaszusammensetzung, wie auf der Meßstrecke zu schaffen.

Die gekapselte interferometrische Einrichtung kann selbstverständlich auch nach einem nicht heterodynen Meßverfahren, etwa mit einem Einfrequenz-Interferometer, arbeiten, wobei im einfachsten Fall die Strahlteileinrichtung zur Erzeugung zweier Teilstrahlenbündel und die Mischeinrichtung durch ein und dieselbe halbdurchlässige Schicht gebildet sind. in der Anwendung ist die interferometrische Einrichtung nicht auf die Bestimmung von linearen Verschiebungen eines Bauteiles beschränkt. Auch Verdrehungen bzw. Verkippungen eines beweglichen Bauteiles können erfaßbar sein.

Wenngleich auch Wellenlängenbestimmungseinrichtungen, die auf einem Vergleich mit einer Maßverkörperung basieren und somit direkt die Lichtwellenlänge im Medium ermitteln, von Vorteil sind, sind durchaus auch andere Wellenlängenbestimmungseinrichtungen, welche im wesentlichen eine Brechzahlbestimmung vornehmen, denkbar und möglich.

## Patentansprüche

1. Interferometrische Einrichtung zur Messung von Lageänderungen eines beweglichen Bauteiles, mit einer Lichtquelle (4) zum Aussenden eines Lichtstrahlenbündels, mit einer Strahlteilereinrichtung (8) zur Aufteilung dieses Lichtstrahlenbündels in zwei getrennte Teilstrahlenbündel, von denen zumindest ein Teil des einen Teilstrahlenbündels einen festen Referenzzweig durchläuft und zumindest ein Teil des anderen Teilstrahlenbündels einen Meßzweig veränderbarer optischer Länge durchläuft, wobei er über ein verstellbares, mit dem beweglichen Bauteil verbundenes Reflektorsystem (11) geführt ist, und mit einer fotoelektrischen Detektorvorrichtung (23), die die Intensität der nach Durchlaufen des Referenzzweiges bzw. des Meßzweiges zur Interferenz gebrachten Teilstrahlenbündel analysiert, wobei die optischen Komponenten samt Medium- und Referenzzweig in einem im wesentlichen geschlossenen Gehäuse (3) angeordnet sind und wenigstens eine zumindest zeitweilig einschaltbare Einrichtung (14) zur Erzeugung einer den Meßzweig des Interferometers erfassenden Gasströmung vorgesehen ist, dadurch gekennzeichnet, daß innerhalb des Gehäuses (3) der Meßbereich einer Wellenlängenbestimmungseinrichtung (2) zur Bestimmung der Wellenlänge des in einem gasförmigen Medium laufenden Meßzweig-Teilstrahlenbündels angeordnet ist und daß die Gasströmung derart geführt ist, daß sie gezielt sowohl den Meßzweig des Interferometers als auch den Meßbereich der Wellenlängenbestimmungseinrichtung (2) erfaßt.

2. Einrichtung nach Anspruch 1, dadurch gekennzeichnet, daß eine zumindest zeitweilig einschaltbare Ventilatoreinrichtung (14) vorgesehen ist, die im Gehäuse (3) eine Gasströmung vom Meßbereich der Wellenlängenbestimmungseinrichtung (2) zum Meßzweig des Interferometers oder umgekehrt hervorruft.

3. Einrichtung nach Anspruch 2, dadurch gekennzeichnet, daß die Ventilatoreinrichtung eine Umwälzeinrichtung ist, die Gas innerhalb des Gehäuses umwälzt.

4. Einrichtung nach Anspruch 2, dadurch gekennzeichnet, daß die Ventilatoreinrichtung eine vorzugsweise an der Gehäusewand angbebrachte Lüftereinrichtung (14) ist, die dem Gehäuseinneren von außen Luft zuführt bzw. Luft aus dem Gehäuseinneren pumpt und die im Gehäuse (3) vorzugsweise eine im wesentlichen laminare Luftströmung hervorruft.

5. Einrichtung nach Anspruch 4, dadurch gekennzeichnet, daß der Lüftereinrichtung (14) mindestens ein Filter (15) vorgeschaltet ist.

6. Einrichtung nach einem der Ansprüche 1 bis 5, dadurch gekennzeichnet, daß zwischen einzelnen Gehäuseabschnitten eine oder mehrere einstellbare Drosseleinrichtung(en), insbesondere Drosselklappe(n),zum Druckabgleich in den Gehäuseabschnitten angeordnet ist (sind).

7. Einrichtung nach einem der Ansprüche 1 bis 6 , dadurch gekennzeichnet, daß alle Wärmequellen der interferometrischen Einrichtung, insbesondere die Lichtquelle(n) (4,25),gegenüber jenem Gehäusebereich wärmegedämmt sind, der den Meßzweig und die Wellenlängenbestimmungseinrichtung (2) enthält.

8. Einrichtung nach einem der Ansprüche 1 bis 7, dadurch gekennzeichnet, daß der bewegliche Bauteil (3), dessen Lageänderung zu messen ist, außerhalb des Gehäuses (3) liegt und über eine durch eine Bürstendichtung (13) in einer Gehäusewand verlaufende Verbindungseinrichtung, insbesondere eine Verbindungsstange (10), starr mit dem beweglichen Reflektorsystem (11) verbunden ist.

9. Einrichtung nach Anspruch 8, dadurch gekennzeichnet, daß ein Teil (13a) der Borstenhaare der Bürstendichtung (13) von einer Längsseite eines Gehäuseschlitzes in diesen Gehäuseschlitz ragt und der andere Teil (13b) der Borstenhaare von der gegenüberliegenden Längsseite des Gehäuseschlitzes in diesen Gehäuseschlitz ragt.

10. Einrichtung nach einem der Ansprüche 1 bis 9, dadurch gekennzeichnet, daß das Gehäuse (3) aus zumindest zwei Gehäuseteilen besteht, die über flexible Schläuche oder starre Rohre miteinander verbunden sind und eine insgesamt im wesentlichen geschlossene Einheit bilden.

11. Einrichtung nach einem der Ansprüche 1 bis 10, dadurch gekennzeichnet, daß die Wellenlängenbestimmungseinrichtung (2) ein in an sich bekannter Weise zwei beabstandete Reflexionsflächen (18a,18b) aufweisendes Etalon (18) als methanische Maßverkörperung umfaßt, wobei der in metrischen Einheiten bekannte Abstand der Reflexionsflächen (18a,18b) in Einheiten der im Medium vorliegenden Wellenlänge des verwendeten Lichtstrahlenbündels interferometrisch erfaßbar ist, und daß der zwischen den Reflexionsflächen (18a,18b) befindliche Raum von derselben Gasströmung durchströmt wird wie der eigentliche Meßzweig des Interferometers.

12. Einrichtung nach Anspruch 11, dadurch gekennzeichnet, daß die Wellenlängenbestimmungseinrichtung (2) ein Etalon (18) mit zwei beabstandeten Reflexionsflächen (18a, 18b), sowie einen Hilfsreflektor (21) aufweist, der um eine durch den Abstand der Reflexionsflächen (18a,18b) gegebene Strecke verschiebbar ist und dessen Verschiebeweg gleichzeitig durch ein Hilfsinterferomter (22,23) erfaßbar ist, wobei durch die Gasströmung auf der Verschiebestrecke des Hilfsreflektors (21), zwischen den beiden Reflexionsflächen (18a,18b) des Etalons (18) und im eigentlichen Meßzweig im wesentlichen dieselben Mediumsbedingunen hergstellt bzu. aufrechterhalten sind.

13. Einrichtung nach Anspruch 11 oder 12, dadurch gekennzeichnet, daß die Wellenlängenbestimmungseinrichtung in an sich bekannter Weise eine Hilfsinterferometereinrichtung (33,34,35) zur Erfassung und/oder Kompensation von Wellenlängenänderungen umfaßt, welche die durch Änderung der Brechzahl des Mediums und/oder der Frequenz des von der Lichtquelle (4) ausgesandten Lichtes hervorgerufene scheinbare Abstandsänderung zweier Reflexionsflächen erfaßt, und daß diese Reflexionsflächen von den Reflexionsflächen (18a,18b) eines außerdem zur absoluten Wellenlängenbestimmung verwendeten Etalons (18) gebildet bzw. darauf angebracht sind.

## Claims

1. Interferometer device for measuring displacements of a movable structural component, comprising a light source (4) for emission of a light beam, providing a beam splitting device (8) for separation of this light beam into two partial beams, of which at least a part of one of the partial beams traverses a set reference path and a least one part of the other partial beam traverses a measuring path of variable optical length whereby said other partial beam is led via an adjustable reflector system (11) connected to a movable structural component, and with a photoelectric detector device (23) that analyzes the intensity of the interfering partial beams which interfere after respective traversal of the reference and measuring paths, whereby the optical components are arranged together with measuring and reference paths in an essentially sealed housing (3) and whereby means (14) are provided to create a gas-flow which reachses the measuring path of the interferometer, said means may be turned on at least temporarily, characterized in that within the housing (3) there is arranged the measuring section of a wavelength determination device (2) for determining the wavelength of the partial beam which travels in a gaseous medium and that the gas-flow is led in such a manner that it reaches the measuring path of interferometer as well as the measuring section of the wavelength determination device (2).

2. The device according to claim 1, wherein a ventilator device (14) is provided which gives rise to a gas-flow in the housing (3) from the measuring section of the wavelength determination device (2) to the measuring path of the interferometer, or vice versa, said ventilator means may be turned on at least temporarily.

3. The device according to claim 2, wherein the ventilator is a gas-circulating device, which circulates the gas inside the housing.

4. The device according to claim 2, wherein the ventilator is a fanning device (14) which is preferably set in the housing wall and which draws air from outside into the housing or pumps air out of the housing (3) and preferably gives rise to an essentially laminar air-flow.

5. The device according to claim 4, wherein at least one filter (15) is arranged upstream the fanning device (14).

6. The device according to any claim of claims 1 to 5, wherein between respective housing sections, one or more pressure valve in particular throttle valve(s) is(are) arranged to regulate the pressure in the housing sections.

7. The device according to any claim of claims 1 to 6, wherein all heat sources of the interferometer, in particular the light source(s) (4, 25) are heat insulated against the housing region that contains the measuring path and the wavelength determination device (2).

8. The device according to any claim of claims 1 to 7, wherein the movable component, whose displacement is measured, lies outside of the housing (3) and is rigidly connected to the movable reflector system (11) by means of a connecting device, in particular a connecting rod (10), which extends through a brush sealing (13) in the housing wall.

9. The device according to claim 8, wherein a part (13a) of the bristle of the brush sealing (13) projects on a side of a housing slit and the other part (13b) of the bristle projects on the opposing side of the housing slit into housing slit.

10. The device according to any claim of claims 1 to 9, wherein the housing (3) is comprised of at least two housing sections, that are interconnected with flexible tubing or rigid pipe and form a complete essentially enclosed unit.

11. The device according to any claim of claims 1 to 10, wherein the wavelength determination device (2) comprises an etalon (18) as mechanical embodiment of measure which includes in a per se known manner two spaced reflective surfaces (18a, 18b), whereby that distance of the reflective surfaces (18a, 18b), which is known in metric units, is interferomically determined in units of the wavelenght in the medium of the employed light beam, and wherein the same gas-flow is conveyed through that space between the reflective surfaces (18a, 18b) and the actual measuring path of the interferometer.

12. The device according to claim 11, wherein the wavelength determination device (2) comprises an etalon (18) with two spaced reflective surfaces (18a, 18b), and an auxiliary reflector (21) that is movable over a distance between the two spaced reflective surfaces (18a, 18b) and whose displacement path is simultaneously determined by a auxiliary interferometer (22, 23), whereby by the gas-flow essentially the same medium conditions are created or maintained at the displacement path of the auxiliary reflector (21) between the two reflective surfaces (18a, 18b) of the etalon (18) and in the actual measuring path.

13. The device according to claim 11 or 12, wherein the wavelength determination device comprises in a per se kown manner an auxiliary interferometer (33, 34, 35) for determination and/or compensation of wavelength fluctuation, which determines seeming changes of the fixed distance of two reflective surfaces, these changes being caused by changes in the refractive index of the medium and/or the frequency of the light emitted from the light source (4), and wherein these reflective surfaces are or are mounted on the reflective surfaces (18a, 18b) of an etalon (18) which is also used for a determination of the absolute wavelenght.

## Revendications

1. Dispositif interférométrique, pour mesurer des variations de position d'un élément de construction mobile, avec une source lumineuse (4), pour émettre un faisceau de rayons lumineux, avec un dispositif diviseur de rayons (8) destiné à diviser ce faisceau de rayons lumineux en deux faisceaux lumineux partiels séparés, dont au moins une partie d'un premier faisceau lumineux partiel parcourt une ramification de référence fixe et au moins une partie de l'autre faisceau de rayon lumineux partiel parcourt une ramification de mesure d'une longueur optique modifiable, en étant guidé par l'intermédiaire d'un système réflecteur (11) réglable, relié à l'élément de construction mobile, et avec un dispositif détecteur photoélectrique (23), analysant l'intensité du faisceau de rayons partiels mis en interférence après avoir parcouru la ramification de référence, respectivement la ramification de mesure, les composantes optiques de l'ensemble des ramifications de mesure et de référence étant disposées dans un boîtier (3) pratiquement fermé et au moins un dispositif (14), pouvant être mis en service au moins par périodes de temps, étant prévu pour produire un courant de gaz englobant la ramification de mesure de l'interféromètre, caractérisé en ce que la zone de mesure d'un dispositif de détermination de longueur d'onde (2) est disposée à l'intérieur du boîtier (3), en vue de déterminer la longueur d'onde du faisceau de rayons partiel de ramification de mesure passant dans un milieu gazeux et en ce que le courant de gaz est guidé de telle façon qu'il englobe, tant la ramification de mesure de l'interféromètre que la zone de mesure du dispositif de détermination de longueur d'onde (2).

2. Dispositif selon la revendication 1, caractérisé en ce qu'est prévu un dispositif à ventilateur (14), susceptible d'être mis en service au moins par périodes de temps et provoquant dans le boîtier (3) un courant de gaz allant de la zone de mesure du dispositif de détermination de longueur d'onde (2) à la ramification de mesure de l'interféromètre, ou inversement.

3. Dispositif selon la revendication 2, caractérisé en ce que le dispositif à ventilateur est un dispositif à circulation, faisant circuler les gaz à l'intérieur du boîtier.

4. Dispositif selon la revendication 2, caractérisé en ce que le dispositif à ventilateur est un dispositif aérateur (14) monté de préférence sur la paroi de boîtier, amenant à l'intérieur de l'air venant de l'extérieur, ou pompant l'air situé à l'intérieur du boîtier et provoquant de préférence dans le boîtier (3) un courant d'air sensiblement laminaire.

5. Dispositif selon la revendication 4, caractérisé en ce qu'au moins un filtre (15) est mis en circuit en amont du dispositif aérateur (14).

6. Dispositif selon l'une des revendications 1 à 5, caractérisé en ce qu'un ou plusieurs dispositifs d'étranglement réglables, et notamment un ou des clapets d'étranglement, destiné(s) à équilibrer la pression dans les sections de boîtier est (sont) disposé(s) entre les différentes sections de boîtier.

7. Dispositif selon l'une des revendications 1 à 6, caractérisé en ce que toutes les sources thermique du dispositif interférométrique, en particulier la ou les source(s) lumineuse(s) (4,25) sont isolées thermiquement par rapport à la zone de boîtier contenant la ramification de mesure et le dispositif de détermination de longueur d'onde (2).

8. Dispositif selon l'une des revendicationa 1 à 7, caractérisé en ce que l'élément de construction mobile, dont la variation de position doit être mesurée, est situé à l'extérieur du boîtier (3) et est relié rigidement au système de réflecteur (11) mobile, par l'intermédiaire d'un dispositif de liaison et notamment une tige de liaison (10) s'étendant à travers un joint d'étanchéité à brosse (13) monté dans une paroi du carter.

9. Dispositif selon la revendication 8, caractérisé en ce qu'une partie (13a) des soies de brosse du joint d'étanchéité à brosse (13) pénètre, depuis un côté longitudinal d'une fente de boîtier, dans cette fente de boîtier et l'autre partie (13b) des soies de brosse pénètre, depuis le côté longitudinal opposé de la fente de boîtier, dans cette fente de boîtier.

10. Dispositif selon l'une des revendications 1 à 9, caractérisé en ce que le boîtier est composé d'au moins deux parties de boîtier, reliées ensemble par l'intermédiaire de tuyaux flexibles ou de tuyaux rigides et formant un ensemble globalement pratiquement fermé.

11. Dispositif selon l'une des revendications 1 à 10, caractérisé en ce que le dispositif de détermination de longueur d'onde (2) est un étalon (18), présentant, à titre de matérialisation mécanique de la mesure, de manière connue, deux surfaces de réflexion (18a,18b) espacées, l'espacement connu et exprimé en unités métriques entre les surfaces de réflexion (18a,18b) étant mesurable, par voie interférométrique, en unités de la longueur d'onde, existant dans le milieu, du faisceau de rayon lumineux utilisé, et en ce que l'espace situé entre les surfaces de réflexion (18a,18b) est parcouru par le même écoulement de gaz que la ramification de mesure proprement dite de l'interféromètre.

12. Dispositif selon la revendication 11, caractérisé en ce que le dispositif de détermination de longueur d'onde (2) présente un étalon (18) comportant deux surfaces de réflexion (18a,18b) espacées, ainsi qu'un réflecteur auxiliaire (21), déplaçable sur une distance déterminée par l'espacement des surfaces de réflexion (18a,18b) et dont la course de déplacement est simultanément mesurée au moyen d'un interféromètre auxiliaire (22,23), les mêmes conditions de milieu étant établies ou maintenues grâce au courant de gaz sur la course de déplacement du réflecteur auxiliaire (21), entre les deux surfaces de réflexion (18a,18b) de l'étalon (18) et dans la ramification de mesure proprement dite.

13. Dispositif selon la revendication 11 ou 12, caractérisé en ce que le dispositif de détermination de longueur d'onde comprend, de manière connue en soi, un dispositif interférométrique auxiliaire (33,34,35), destiné à mesurer et/ou à compenser des variations de longueur d'onde, qui mesure la variation d'espacement apparente de deux surfaces de réflexion, provoquée par modification de l'indice de réfraction du milieu et/ou de la fréquence de la lumière émise par la source lumineuse (4), et en ce que ces surfaces de réflexion sont formées par les surfaces de réflexion (18a,18b) d'un étalon (18) utilisé en outre pour opérer la détermination absolue de la longueur d'onde, ou montées sur celui-ci.
